(19)

**Europäisches Patentamt**
**European Patent Office**
**Office européen des brevets**

(11) **EP 3 007 917 B1**

(12) **EUROPEAN PATENT SPECIFICATION**

(45) Date of publication and mention
of the grant of the patent:
**11.04.2018 Bulletin 2018/15**

(21) Application number: **14811668.4**

(22) Date of filing: **02.06.2014**

(51) Int Cl.:
*B60D 1/00* *(2006.01)*      *B60D 1/58* *(2006.01)*
*H04L 29/06* *(2006.01)*      *H04W 12/04* *(2009.01)*
*H04W 12/06* *(2009.01)*      *B60D 1/62* *(2006.01)*
*G08G 1/133* *(2006.01)*      *H04W 4/00* *(2018.01)*
*G08G 1/00* *(2006.01)*

(86) International application number:
**PCT/SE2014/050665**

(87) International publication number:
**WO 2014/200414 (18.12.2014 Gazette 2014/51)**

(54) **SYSTEM AND METHOD FOR COMMUNICATION BETWEEN VEHICLE ENTITIES IN A VEHICLE SYSTEM**

SYSTEM UND VERFAHREN ZUR KOMMUNIKATION ZWISCHEN FAHRZEUGEINHEITEN IN EINEM FAHRZEUGSYSTEM

SYSTÈME ET PROCÉDÉ DE COMMUNICATION ENTRE DES ENTITÉS DE VÉHICULES DANS UN SYSTÈME DE VÉHICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2013 SE 1350715**

(43) Date of publication of application:
**20.04.2016 Bulletin 2016/16**

(73) Proprietor: **Scania CV AB**
**151 87 Södertälje (SE)**

(72) Inventor: **BLOMKVIST, Oscar**
**S-141 60 Huddinge (SE)**

(74) Representative: **Scania CV AB**
**Patents, GP 117kv**
**151 87 Södertälje (SE)**

(56) References cited:
| | |
|---|---|
| **US-A1- 2002 030 590** | **US-A1- 2002 052 687** |
| **US-A1- 2003 073 406** | **US-A1- 2003 233 189** |
| **US-A1- 2007 208 841** | **US-A1- 2008 221 827** |
| **US-A1- 2008 303 648** | **US-A1- 2010 085 215** |
| **US-A1- 2010 199 092** | **US-A1- 2010 232 404** |
| **US-A1- 2011 013 510** | **US-A1- 2012 146 779** |
| **US-A1- 2012 222 130** | **US-B2- 8 363 838** |
| **US-B2- 8 379 936** | |

**Description**

BACKGROUND OF THE INVENTION AND PRIOR ART

The present invention concerns, in general, authenticated telecommunication. In particular, the invention concerns a vehicle system for authentication of a first node present in a first vehicle unit for communication with a second node present in a second vehicle unit according to the preamble to claim 1, and a corresponding method according to the preamble to claim 5. The invention also concerns a computer program according to claim 11 and a computer-readable medium according to claim 12.

Modern motor vehicles often contain a communication node that is arranged so as to, for example, report the vehicle position and general status parameters to a central node, e.g. a factory via the mobile telephone network. However, trailers are not normally equipped with this type of node. There is nevertheless a desire on the part of the market to be able to track the position and status of trailers as well. A hauling contractor may be interested in sharing in information as to which tractor is towing a given trailer, or the reverse, i.e. which trailer is being towed by which tractor. This would be made possible if information could be exchanged directly between trailer and tractor.

US 8,344,541 shows a solution in which electrical systems in a tractor and a trailer communicate with one another as part of an electric safety system.

US 8,013,759 describes a system in which a tractor communicates wirelessly with a towed trailer with a view to detecting any anomalies in the coupling between them. Specifically, an alarm is generated if the towed vehicle exhibits an acceleration relative to the tractor.

US 2012/0222130 describes an authentication system for safeguarding data integrity during exchanges of information among various units within a given vehicle, e.g. a car.

PROBLEMS ASSOCIATED WITH THE PRIOR ART

Technical solutions thus exist for exchanging information between a tractor and a trailer, e.g. over a wireless interface. Data-secure systems adapted for vehicular applications also exist.

However, no effective solution exists for enabling a trailer to make contact with a mobile network via a communication node in a tractor.

Nor is there any general solution for pairing together nodes in a vehicle system with one another in a simple and reliable way, so that protected wireless communication can be established between communication nodes that are disposed in different vehicle elements, e. g. a tractor and a trailer.

SUMMARY OF THE INVENTION

The object of the present invention is thus to provide a solution to the foregoing problems and offer a simple means of establishing secure and reliable communication between communication nodes that are disposed in different vehicle parts of a vehicle system.

According to one aspect of the invention, this object is achieved by means of the system described above, wherein the first vehicle unit comprises at least one first sensor configured so as to measure at least one first velocity parameter representing a velocity of the first vehicle unit relative to an underlying surface on which the first vehicle unit is traveling. The first node further comprises a first processing unit and a first communication unit. The first processing unit is configured so as to calculate a first communication key on the basis of at least one first velocity parameter, and the first communication unit is configured so as to transmit the first communication key via a wireless communication link. The second vehicle unit comprises at least one second sensor configured so as to measure a second velocity parameter representing a velocity of the second vehicle unit relative to an underlying surface on which the second vehicle unit is traveling. The second node comprises a second processing unit, a second communication unit and an authentication unit. The second processing unit is configured so as to calculate a second communication key on the basis of said at least one second velocity parameter. The second communication unit is configured so as to receive the first communication key from the first node via the wireless communication link. The authentication unit is configured so as to compare the first communication key to the second communicate key and, if a similarity criterion between the first and second communication keys is met, to authenticate the first node for communication with the second node.

This system is advantageous since, normally speaking, velocity parameters are always available in modern vehicle units (e.g. tractors and trailer), e.g. via a bus line, as these parameters are required by the electronic brake systems. The relevant bus line can be of the CAN type (CAN = Controller Area Network). A readily accessible basis thus exists for the proposed communication keys. In addition, the velocity constitutes a satisfactory basis for vehicle pairing, since matching velocities for two vehicle elements over a given period of time is strongly correlated with the fact that said vehicle elements are physically coupled together, particularly if the vehicle elements are simultaneously present within the range of the wireless communication links of one another.

According to one embodiment of this aspect of the invention, the first and the second communication units are configured so as to transmit a request message via the wireless communication link. The request message is arranged so as, when received in the respective unit, to cause the first processing unit to calculate the first communication key and the second processing unit to calculate the second communication key. The procedure can thus be initiated by any arbitrary vehicle element, and can be started either manually or automatically, e.g. when one of the vehicle elements registers the wireless communication link of the other vehicle element.

According to another embodiment of this aspect of the invention, the authentication unit is configured so as to cause the second communication unit to transfer an authentication message to the first communication unit via the wireless communication link. The authentication message is arranged so as to authenticate the first node for communication with the second node. After the authentication message is received, the first and the second nodes can thus begin to communicate with one another, e.g. protected by encryption. A communication link has thus been established between the two nodes.

According to yet another embodiment of this aspect of the invention, the first and the second communication keys are calculated on the basis of a transfer function, which is stored in each of the first and the second nodes; and a respective series of values for the at least one first and second velocity parameters, which values have been registered during a predetermined time window. This makes it possible to determine, by means of a simple and calculation-efficient procedure, whether the vehicle unit that contains the first node is physically coupled together with the vehicle unit that contains the second node.

According to another aspect of the invention, the object is achieved by means of the method describe above, in which at least one first velocity parameter is measured in the first vehicle unit. The at least one first velocity parameter represents a velocity of the first vehicle unit relative to an underlying surface on which the first vehicle unit is traveling. Furthermore, a first communication key is calculated in the first node on the basis of said at least one first velocity parameter. In the second vehicle unit, at least one second velocity parameter is measured that represents a velocity of the second vehicle unit relative to an underlying surface on which the second vehicle unit is traveling. In the second node, a second communication key is also calculated based on the at least one second velocity parameter. The first communication key is transferred from the first node to the second node. In the second node, the first communication key is then compared with the second communication key. If a similarity criterion between the first and second communication keys is met, the first node is then authenticated for communication with the second node. The advantages of this method, as well as the preferred embodiments thereof, are presented in the discussion above with reference to the proposed communication system.

According to yet another aspect of the invention, the object is achieved by means of a computer program that is directly downloadable to the internal memory of a computer and contains software for controlling the steps according to the method proposed above when said program is run on a computer.

According to yet another aspect of the invention, the object is achieved by means of a computer-readable medium with a program stored thereon, wherein the program is adapted so as to enable a computer to control the steps according to the method proposed above.

BRIEF DESCRIPTION OF THE DRAWINGS

The present invention will now be clarified in greater detail by means of embodiments, which are described as examples, and with reference to the accompanying drawings.

Figure 1      shows a schematic depiction of a vehicle comprising two vehicle units that are coupled together and communicating according to one embodiment of the invention;

Figure 2      shows a diagram illustrating a general transfer function on the basis of which communication keys can be calculated according to the invention;

Figures 3a-c  exemplify, in diagram form, various alternatives for calculating communication keys according to embodiments of the invention;

Figures 4-5   show flow diagrams that illustrate the general methods for authenticating a first node for communication with a second node according to the invention.

DESCRIPTION OF EMBODIMENTS OF THE INVENTION

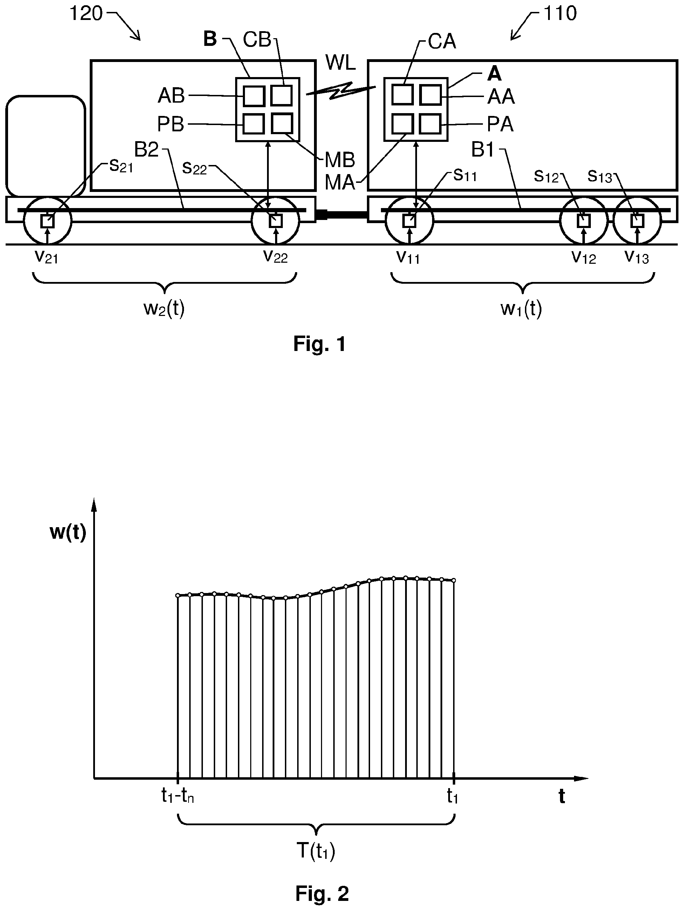

We refer by way of introduction to Figure 1, which shows a schematic depiction of a vehicle comprising two connected vehicle units 120 and 110 that have been paired together for communication according to one embodiment of the invention.

Specifically, according to the invention, a first node A present in a first vehicle unit 110 (e.g. a trailer) is authenticated for communication with a second node B present in a second vehicle unit 120 (e.g. a tractor).

The first vehicle unit 110 comprises at least one first sensor, here exemplified by $s_{11}$, $s_{12}$ and $s_{13}$, configured so as to measure at least one first velocity parameter $v_{11}$, $v_{12}$ or $v_{13}$.

The at least one first velocity parameter $v_{11}$, $v_{12}$ or $v_{13}$ represents a velocity of the first vehicle unit 110 relative to an underlying surface on which the first vehicle unit 110 is traveling, e.g. a roadway. The velocity parameters $v_{11}$, $v_{12}$ and $v_{13}$ can thus indicate wheel speeds (which can in turn be derived knowing the rotational speeds and respective diameters of the wheels). In modern vehicles, the velocity parameters $v_{11}$, $v_{12}$ and $v_{13}$ are

normally available on a bus line B1. If more than one parameter is available, the velocity parameters $v_{11}$, $v_{12}$ and $v_{13}$ are advantageously weighed together to produce a parameter $w_1(t)$, for example, by means of mean-value forming. The velocity parameters $v_{11}$, $v_{12}$, $v_{13}$ and $w_1(t)$ are updated on repeated occasions, e.g. every 20th millisecond, and suitably represented in a digital format, e. g. with 64-bit precision.

The first node A comprises a first processing unit PA configured so as to calculate a first communication key $k_1(t)$ on the basis of said at least one first velocity parameter $v_{11}$, $v_{12}$, $v_{13}$ and/or $w_1(t)$.

A first communication unit CA in the first node A is configured so as to transmit the first communication key $k_1(t)$ via a wireless communication link WL, which is implemented via e.g. Bluetooth, WiFi or the license-free 433 MHz band.

Analogously with the foregoing, the second vehicle unit 120 comprises at least one second sensor, here exemplified by $s_{21}$ and $s_{22}$, which is configured so as to measure a second velocity parameter $v_{21}$, $v_{22}$ and/or $w_2(t)$, where $w_2(t)$ consists, for example of a weighing together $v_{21}$ and $v_{22}$. The at least one second velocity parameter $v_{21}$, $v_{22}$ or $w_2(t)$, which is suitably available on a bus line B2, represents a velocity of the second vehicle unit 120 relative to an underlying surface on which the second vehicle unit 120 is traveling.

The second node B comprises a processing unit PB, a second communication unit CB and an authentication unit AB. The second processing unit PB is configured so as to calculate a second communication key $k_2(t)$ on the basis of said at least one second velocity parameter $v_{21}$, $v_{22}$ or $w_2(t)$, which indicates a weighing together of $v_{21}$ and $v_{22}$. The second communication unit CB is configured so as to receive the first communication key $k_1(t)$ from the first node A via the wireless communication link WL. The authentication unit AB is configured so as to compare the first communication key $k_1(t)$ to the second communication key $k_2(t)$. If a similarity criterion is met between the first and second communication keys $k_1(t)$ and $k_2(t)$, the authentication unit AB is configured so as to authenticate the first node A for communication with the second node B. In other words, the first node A is paired together with the second node B.

Because the proposed method can just as well be reversed, i.e. the second node B can be authenticated for communication with the first node A, the first node A also advantageously contains a corresponding authentication unit AA.

According to one preferred embodiment of the invention, at least either the first and the second communication unit CA or CB is configured so as to transmit a request message via the wireless communication link WL.

The request message can either be initiated manually by an operator or automatically, e.g. as a result of at least one of the communication units CA or CB detecting the presence of a wireless communication link WL belonging to a node other than itself. The request message is in any event arranged so as to cause the first processing unit PA to calculate the first communication key $k_1(t)$ and the second processing unit PB to calculate the second communication key $k_2(t)$.

To confirm that the first node A is authenticated for communication with the second node B, the authentication unit AB is advantageously also configured so as to cause the second communication unit CB to transfer an authentication message to the first communication unit CA via the wireless communication link WL.

According to one preferred embodiment of the invention, the first and second communication keys $k_1(t)$ and $k_2(t)$ are calculated on the basis of a transfer function $f(t)$ stored in each of the first and second nodes A and B, and a respective series of values for the at least one first and second velocity parameters $v_{11}$, $v_{12}$, $v_{13}$ and/or $w_1(t)$ and $v_{21}$, $v_{22}$ and/or $w_2(t)$. The values in the series have here been registered during a time window $T(t_1)$ of predetermined length, say 5 to 10 seconds. Figure 2 shows a diagram that illustrates a general transfer function for such a time window $T(t_1)$ with respect to the time $t_1$ and applied to a velocity parameter $w(t)$. The time window $T(t_1)$ comprises the values for the velocity parameter $w(t)$ from an earlier time point $t_1 - t_n$ to the time $t_1$.

A communication key $k(t_1)$ for the time $t_1$ can be calculated according to the general relationship:

$$k(t_1) = f(w(t_1 - t_n), \ldots, w(t_1)),$$

which means that a vector is converted into a scalar.

Because the clock in the first node A is typically not synchronized with the clock in the second node B, it is reasonable to assume that the first communication key $k_1(t_1)$ will not be identical with the second communication key $k_2(t_1)$ even if both nodes A and B refer to the same time window $T(t_1)$, utilize the same transfer function $f(t)$ and the vehicle units in which the nodes A and B are disposed are traveling at the exact same velocity during the time encompassed by the time window $T(t_1)$. However, if the series contains many values, say roughly 50, the first communication key $k_1(t_1)$ should be relatively similar to the second communication key $k_2(t_1)$ if both nodes A and B have traveled at the exact same velocity during the time window $T(t_1)$. According to one preferred embodiment of the invention, it is therefore sufficient that the similarity criterion between $k_1(t_1)$ and $k_2(t_1)$ be met, wherein the similarity criterion allows for a certain discrepancy between $k_1 t_1)$ and $k_2(t_1)$.

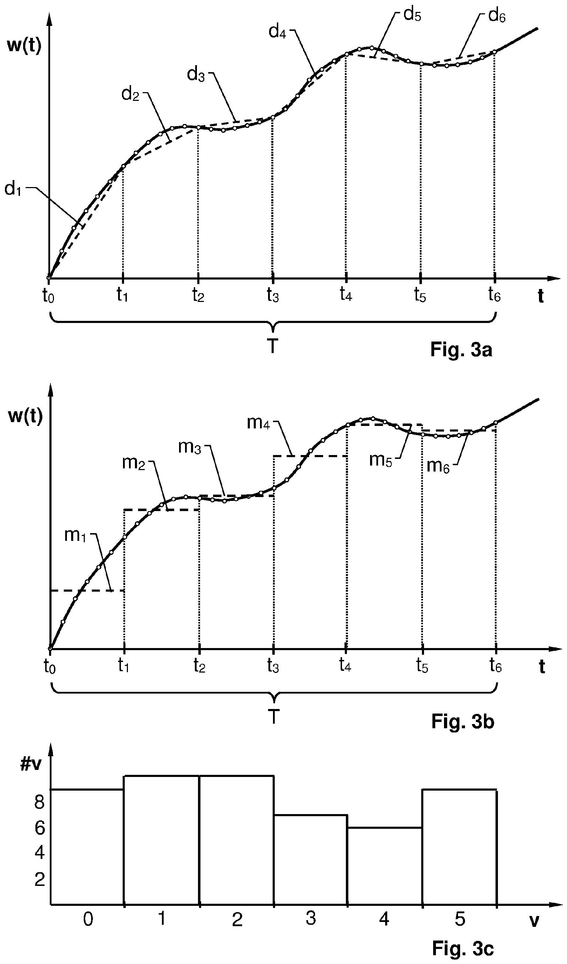

Figure 3a shows a graph of a velocity $w(t)$ as a function of the time $t$, which illustrates a first example of a transfer function according to one embodiment of the invention. For the sake of clarity, the time window T here contains only seven measurement values registered at the timepoints $t_0$, $t_1$, $t_2$, $t_3$, $t_4$, $t_5$ and $t_6$. The transfer function f entails in this case that a respective tangent $d_1$, $d_2$,

$d_3$, $d_4$, $d_5$ and $d_6$ is calculated as the slope between two adjacent measurement values for the velocity w(t). A corresponding communication key k(t) can thus be expressed as k(t) = $d_1$ + $d_2$ + $d_3$ + $d_4$ + $d_5$ + $d_6$, or k(t) can be represented as a number with a digit for each value within the time window T, e.g. represented hexadecimally, so that: k(t) = $d_1 d_2 d_3 d_4 d_5 d_6$.

Figure 3b shows the same graph of the velocity w(t) as in Figure 3a. However, Figure 3b illustrates a second example of a transfer function f according to one embodiment of the invention. Here again the time window T contains only eight measurement values, which were registered at the timepoints $t_0$, $t_1$, $t_2$, $t_3$, $t_4$, $t_5$ and $t_6$. Now the transfer function f instead entails that a mean value $m_1$, $m_2$, $m_3$, $m_4$, $m_5$ and $m_6$ is calculated between two adjacent measurement values for the velocity w(t). A corresponding communication key k(t) is thus calculated as the sum k(t) = $m_1$ + $m_2$ + $m_3$ + $m_4$ + $m_5$ + $m_6$, or as the six-digit number k(t) = $m_1 m_2 m_3 m_4 m_5 m_6$.

Both of the foregoing methods can of course be combined so that, for example, the communication key k(t) is calculated as the sum k(t) = $m_1 d_1$ + $m_2 d_2$ + $m_3 d_3$ + $m_4 d_4$ + $m_5 d_5$ + $m_6 d_6$ or the 12-digit number k(t) = $m_1 d_1 m_2 d_2 m_3 d_3 m_4 d_4 m_5 d_5 m_6 d_6$.

Figure 3c shows yet another example of a transfer function according to one embodiment of the invention. A histogram here indicates the magnitude of a velocity value v along the horizontal axis, while the vertical axis #v represents the number of values within the time window T that have a given value v. The communication key k(t) is calculated, for example, as:

the sum k(t) = #v(0) + #v(1)+ #v(2) + #v(3) + #v(4) + #v(5) or the number k(t) = #v(0)#v(1)#v(2)#v(3)#v(4)#v(5).

The first node A is suitably controlled so as to function according to the foregoing by means of a computer program stored in a memory unit MA, which is contained in the first node A or communicatively connected therewith. In a corresponding manner, the second node B is advantageously controlled by means of a computer program stored in a memory unit MB, which is contained in the second node B or communicatively connected therewith.

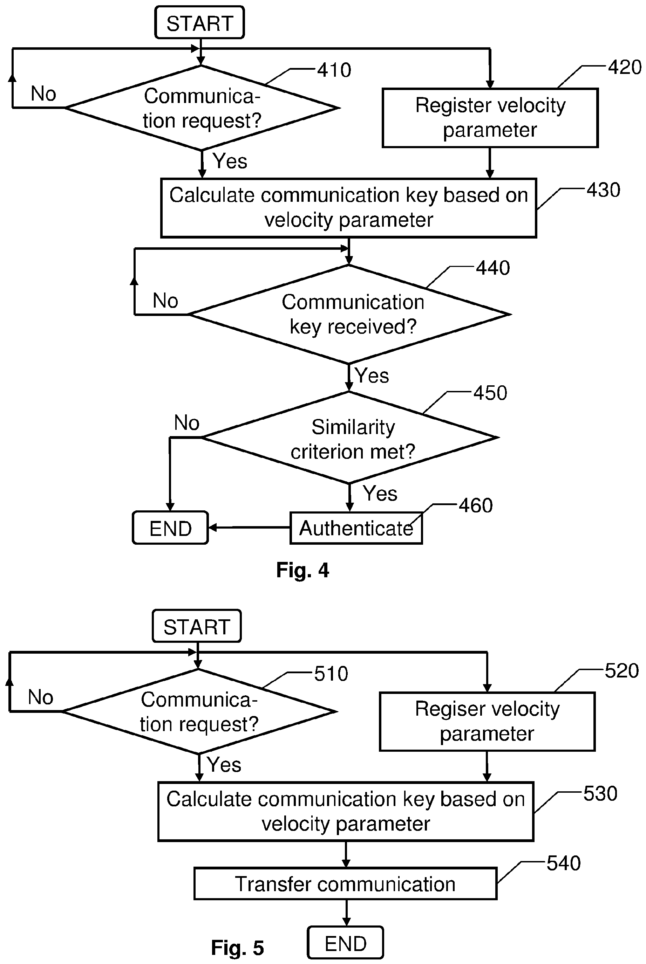

For purposes of summarization, a preferred embodiment of the proposed method according to the invention for authenticating a first node in a first vehicle unit for communication with a second node in a second vehicle unit will now be described with reference to the flow diagrams in Figures 4 and 5.

Figure 4 describes the procedure that is carried out in the second node B disposed, e.g. in a tractor. In a first step 410, a determination is made here as to whether a communication request has been received concerning, e.g. authentication, from a first node A in a trailer via a wireless communication link. Step 410 can alternatively comprise the transmission of a communication request, e.g. via a wireless communication link. If a communication request has been received/transmitted, a step 430 follows. Otherwise the procedure loops back and stops in stage 410.

In parallel with step 410, a step 420 registers at least one velocity parameter representing a velocity of the second vehicle unit relative to an underlying surface on which the second vehicle unit is traveling. The at least one velocity parameter is preferably obtained from a freestanding unit in the relevant vehicle unit, e.g. an electronic brake control unit, via a communication bus, e.g. of the CAN type.

Step 430 calculates a communication key on the basis of said at least one velocity parameter, after which a step 440 follows. Step 440 determines whether a communication key has been received from another node, e.g. the first node A, which transmitted the communication request in step 410 and, if such is the case, a step 450 follows. Otherwise the procedure loops back and stops in step 440.

Step 450 compares the communication key calculated in step 430 to the communication key received in step 440. If a similarity criterion between the keys is met, a step 460 follows. Otherwise the procedure is concluded. Alternatively, the procedure can be repeated a number of times (fixed or adaptively) to offer the nodes A and B additional opportunities to pair themselves together.

Step 450 authenticates the node from which the communication key was received in step 440 for communication with the node B in which the relevant procedure is being carried out.

In a first step 510 in Figure 5, a determination is made as to whether a communication request regarding authentication has been received, e.g. from the aforementioned second node B. Step 510 can alternatively involve transmitting the communication request, e.g. via a wireless communication link, to the second node B. If a communication request has been received/transmitted, a step 530 follows. Otherwise the procedure loops back and stops in step 510.

In parallel with step 510, a step 520 registers at least one velocity parameter representing a velocity of the first vehicle unit relative to an underlying surface on which the first vehicle unit is traveling. Analogously with the foregoing, the at least one velocity parameter is preferably obtained from a freestanding unit in the relevant vehicle part, such as an electronic brake control unit, via a bus, e.g. of the CAN type.

Step 530 calculates a communication key on the basis of said at least one velocity parameter, after which a step 540 follows in which the communication key is transferred to the second node B (cf. step 440 above). The procedure is then concluded. The procedure can alternatively be repeated a number of times (fixed or adaptively) in order to offer the nodes A and B additional opportunities to pair themselves together.

Figures 4 and 5 describe the methods with reference to a tractor and a trailer. However, according to the invention, these roles can just as well be reversed, or pertain to completely different combinations of vehicle units.

Furthermore, the method steps described with reference to Figures 4 and 5 can be controlled by means of a programmed computer device. In addition, although the embodiments of the invention described above with reference to the figures comprise a computer and processes performed in a computer, the invention extends to a computer program, particularly a computer program on or in a carrier adapted so as to implement the invention practically.

The program can be in the form of source code, object code, a code that constitutes something intermediate between source and object code, such as code in partly compiled form, or in any other form whatsoever that is suitable for use in implementing the process according to the invention. The carrier can be any arbitrary entity or device that is capable of serving as a medium for the program. For example, the carrier can comprise a storage medium such as a flash memory, a ROM (Read Only Memory), for example a CD (Compact Disc) or a semiconductor-ROM, EPROM (Electrically Programmable ROM), EEPROM (Erasable EPROM), or a magnetic registering medium such as a floppy disk or hard drive. The carrier can also be a transmitted carrier such as an electrical or optical signal, which can be conducted through an electrical or optical cable or by radio in some other way. When the program is realized as a signal that can be conducted directly by a cable or other device or element, the carrier can consist of such a cable, device or element. Alternatively, the carrier can be an integrated circuit in which the program is embedded, wherein the integrated circuit is adapted so as to perform, or to be used in connection with the performance of, the relevant processes.

The invention is not limited to the embodiments described with reference to the figures, but rather can be varied freely within the scope of the following claims.

**Claims**

1. A vehicle system for authentication of a first node (A) present in a first vehicle unit (110) for communication with a second node (B) present in a second vehicle unit (120), **characterized in that** the first vehicle unit (110) comprises at least one first sensor ($s_{11}$, $s_{12}$, $s_{13}$) configured so as to measure at least one first velocity parameter ($v_{11}$, $v_{12}$, $v_{13}$, $w_1(t)$) representing a velocity of the first vehicle unit (110) relative to an underlying surface on which the first vehicle unit (110) is traveling; and the first node (A) comprises

   a first processing unit (PA) configured so as to calculate a first communication key ($k_1(t)$) on the basis of said at least one first velocity parameter ($v_{11}$, $v_{12}$, $v_{13}$, $w_1(t)$), and a first communication unit (CA) configured so as to transmit the first communication key ($k_1(t)$) via a wireless communication link (WL);

   the second vehicle unit (120) comprises at least one second sensor ($s_{21}$, $s_{22}$) configured so as to measure a second velocity parameter ($v_{21}$, $v_{22}$, $w_2(t)$) representing a velocity of the second unit (120) relative to an underlying surface on which the second vehicle unit (120) is traveling; the second node (B) comprises

   a second processing unit (PB) configured so as to calculate a second communication key ($k_2(t)$) on the basis of said at least one second velocity parameter ($v_{21}$, $v_{22}$, $w_2(t)$), a second communication unit (CB) configured so as to receive the first communication key ($k_1(t)$) from the first node (A) via the wireless communication link (WL); and an authentication unit (AB) configured so as to compare the first communication key ($k_1(t)$) to the second communication key ($k_2(t)$) and, if a similarity criterion between the first and second communication keys ($k_1(t)$, $k_2(t)$) is met, to authenticate the first node (A) for communication with the second node (B).

2. The system according to claim 1, wherein the first and the second communication units (CA; CB) are configured so as to transmit a request message via the wireless communication link (WL), which request message is intended to cause the first processing unit (PA) to calculate the first communication key ($k_1(t)$) and the second processing unit (PB) to calculate the second communication key ($k_2(t)$).

3. The system according to any of the preceding claims, where the authentication unit (AB) is configured so as to cause the second communication unit (CB) to transfer an authentication message to the first communication unit (CA) via the wireless communication link (WL), which authentication message is intended to authenticate the first node (A) for communication with the second node (B).

4. The system according to any of the preceding claims, wherein the first and the second communication keys ($k_1(t)$, $k_2(t)$) are calculated on the basis of:

   a transfer function ($f(t)$) stored in either of the first or second nodes (A; B), and a respective series of values for the at least one first and second velocity parameters ($v_{11}$, $v_{12}$, $v_{13}$, $w_1(t)$; $v_{21}$, $v_{22}$, $w_2(t)$), which values have been registered during a predetermined time

window ($T(t_1)$).

5. A method for authentication of a first node (A) present in a first vehicle unit (110) for communication with a second node (B) present in a second vehicle unit (120), **characterized by:**

measurement, in the first vehicle unit (110), of at least one first velocity parameter ($v_{11}$, $v_{12}$, $v_{13}$, $w_1(t)$) representing a velocity of the first vehicle unit (110) relative to an underlying surface on which the first vehicle unit (110) is traveling; calculation, in the first node (A), of a first communication key ($k_1(t)$) on the basis of said at least one first velocity parameter ($v_{11}$, $v_{12}$, $v_{13}$, $w_1(t)$), measurement, in the second vehicle unit (120), of at least one second velocity parameter ($v_{21}$, $v_{22}$, $w_2(t)$) representing a velocity of the second vehicle unit (120) relative to an underlying surface on which the second vehicle unit (120) is traveling; calculation, in the second node (B), of a second communication key ($k_2(t)$) on the basis of said at least one second velocity parameter ($v_{21}$, $v_{22}$, $w_2(t)$), transfer of the first communication key ($k_1(t)$ from the first node (A) to the second node (B), comparison, in the second node (B), of the first communication key ($k_1(t)$) to the second communication key ($k_2(t)$) and, if a similarity criterion between the first and second communication keys ($k_1(t)$, $k_2(t)$) is met, authentication of the first node (A) for communication with the second node (B).

6. The method according to claim 5, wherein the calculation of the first communication key ($k_1(t)$) and the calculation of the second communication key ($k_2(t)$) are preceded by the transmission of a request message from the first node (A) to the second node (B) via a wireless communication link (WL).

7. The method according to claim 5 or 6, wherein the calculation of the first communication key ($k_1(t)$) and the calculation of the second communication key ($k_2(t)$) are preceded by the transmission of a request message from the second node (B) to the first node (A) via a wireless communication link (WL).

8. The method according to any of claims 5 to 7, wherein the transfer of the first communication key ($k_1(t)$) from the first node (A) to the second node (B) is effected via a wireless communication link (WL).

9. The method according to claim 8, wherein the authentication of the first node (A) for communication with the second node (B) comprises the transfer of an authentication message from the second node (B) to the first node (A) via the wireless communication link (WL).

10. The method according to any of claims 5 to 9, wherein the first and the second communication keys ($k_1(t)$, $k_2(t)$) are calculated on the basis of:

a transfer function ($f(t)$) stored in either of the first or second nodes (A; B), and a respective series of values for the at least one first and second velocity parameters ($v_{11}$, $v_{12}$, $v_{13}$, $w_1(t)$; $v_{21}$, $v_{22}$, $w_2(t)$), which values have been registered during a predetermined time window ($T(t_1)$).

11. A computer program that is directly downloadable to the internal memory (MA, MB) of a computer, which program contains software for controlling the steps according to any of claims 5 to 10 when said program is run on the computer.

12. A computer-readable medium (MA, MB) with a program stored thereon, wherein the program is adapted so as to enable a computer to control the steps according to any of claims 5 to 10.

**Patentansprüche**

1. Fahrzeugsystem zur Authentifizierung eines ersten Knotens (A), der sich in einer ersten Fahrzeugeinheit (110) befindet, zur Kommunikation mit einem zweiten Knoten (B), der sich in einer zweiten Fahrzeugeinheit (120) befindet,
**dadurch gekennzeichnet, dass**
die erste Fahrzeugeinheit (110) mindestens einen ersten Sensor ($s_{11}$, $s_{12}$, $s_{13}$) aufweist, der zum Messen mindestens eines ersten Geschwindigkeitsparameters ($v_{11}$, $v_{12}$, $v_{13}$, $w_1(t)$) konfiguriert ist, der eine Geschwindigkeit der ersten Fahrzeugeinheit (110) relativ zu einer Untergrundfläche, auf der die erste Fahrzeugeinheit (110) fährt, repräsentiert; und der erste Knoten (A) aufweist

eine erste Verarbeitungseinheit (PA), die zur Berechnung eines ersten Kommunikationsschlüssels ($k_1(t)$) auf Basis des mindestens einen ersten Geschwindigkeitsparameters ($v_{11}$, $v_{12}$, $v_{13}$, $w_1(t)$) konfiguriert ist, und eine erste Kommunikationseinheit (CA), die zum Senden des ersten Kommunikationsschlüssels ($k_1(t)$) über eine drahtlose Kommunikationsverbindung (WL) konfiguriert ist;

die zweite Fahrzeugeinheit (120) mindestens einen zweiten Sensor ($s_{21}$, $s_{22}$) aufweist, der zum Messen eines zweiten Geschwindigkeitsparameters ($v_{21}$, $v_{22}$, $w_2(t)$) konfiguriert ist, der eine Geschwindigkeit der zweiten Fahrzeugeinheit (120) relativ zu einer Untergrundfläche, auf der die zweite Fahrzeugeinheit (120) fährt, repräsentiert;
der zweite Knoten (B) aufweist

eine zweite Verarbeitungseinheit (PB), die zur Berechnung eines zweiten Kommunikationsschlüssels ($k_2(t)$) auf Basis des mindestens einen zweiten Geschwindigkeitsparameters ($v_{21}$, $v_{22}$, $w_2(t)$) konfiguriert ist,
eine zweite Kommunikationseinheit (CB), die zum Empfangen des ersten Kommunikationsschlüssels ($k_1(t)$) vom ersten Knoten (A) über eine drahtlose Kommunikationsverbindung (WL) konfiguriert ist; und
eine Authentifizierungseinheit (AB), die zum Vergleichen des ersten Kommunikationsschlüssels ($k_1(t)$) mit dem zweiten Kommunikationsschlüssel ($k_2(t)$) und zur Authentifizierung des ersten Knotens (A) zur Kommunikation mit dem zweiten Knoten (B) konfiguriert ist, wenn ein Ähnlichkeitskriterium zwischen dem ersten und dem zweiten Kommunikationsschlüssel ($k_1(t)$, $k_2(t)$) erfüllt ist.

2. System nach Anspruch 1, wobei die erste und die zweite Kommunikationseinheit (CA; CB) zum Senden einer Anforderungsmeldung über die drahtlose Kommunikationsverbindung (WL) konfiguriert sind, wobei die Anforderungsmeldung die erste Verarbeitungseinheit (PA) veranlassen soll, den ersten Kommunikationsschlüssel ($k_1(t)$) zu berechnen, und die zweite Verarbeitungseinheit (PB), den zweiten Kommunikationsschlüssel ($k_2(t)$) zu berechnen.

3. System nach einem der vorigen Ansprüche, wobei die Authentifizierungseinheit (AB) konfiguriert ist, die zweite Kommunikationseinheit (CB) zu veranlassen, eine Authentifizierungsmeldung über die drahtlose Kommunikationsverbindung (WL) an die erste Kommunikationseinheit (CA) zu senden, wobei die Authentifizierungsmeldung den ersten Knoten (A) zur Kommunikation mit dem zweiten Knoten (B) veranlassen soll.

4. System nach einem der vorigen Ansprüche, wobei der erste und der zweite Kommunikationsschlüssel ($k_1(t)$, $k_2(t)$) berechnet werden auf Basis von:

einer entweder im ersten oder im zweite Knoten (A; B) gespeicherten Transferfunktion ($f(t)$), und einer jeweiligen Reihe von Werten für den mindestens einen und den zweiten Geschwindigkeitsparameter ($v_{11}$, $v_{12}$, $v_{13}$, $w_1(t)$; $v_{21}$, $v_{22}$, $w_2(t)$), wobei diese Werte während eines vorgegebenen Zeitfensters ($T(ti)$) registriert worden sind.

5. Verfahren zur Authentifizierung eines ersten Knotens (A), der sich in einer ersten Fahrzeugeinheit (110) befindet, zur Kommunikation mit einem zweiten Knoten (B), der sich in einer zweiten Fahrzeugeinheit (120) befindet,
**gekennzeichnet durch**:

in der ersten Fahrzeugeinheit (110) Messung mindestens eines ersten Geschwindigkeitsparameters ($v_{11}$, $v_{12}$, $v_{13}$, $w_1(t)$), der eine Geschwindigkeit der ersten Fahrzeugeinheit (110) relativ zu einer Untergrundfläche, auf der die erste Fahrzeugeinheit (110) fährt, repräsentiert;
im ersten Knoten (A) Berechnung eines ersten Kommunikationsschlüssels ($k_1(t)$) auf Basis des mindestens einen ersten Geschwindigkeitsparameters ($v_{11}$, $v_{12}$, $v_{13}$, $w_1(t)$),
in der zweiten Fahrzeugeinheit (120) Messung mindestens eines zweiten Geschwindigkeitsparameters ($v_{21}$, $v_{22}$, $w_2(t)$), der eine Geschwindigkeit der zweiten Fahrzeugeinheit (120) relativ zu einer Untergrundfläche, auf der die zweite Fahrzeugeinheit (120) fährt, repräsentiert;
im zweiten Knoten (B) Berechnung eines zweiten Kommunikationsschlüssels ($k_2(t)$) auf Basis des mindestens einen zweiten Geschwindigkeitsparameters ($v_{21}$, $v_{22}$, $w_2(t)$),
Übertragen des ersten Kommunikationsschlüssels ($k_1(t)$) vom ersten Knoten (A) zum zweiten Knoten (B),
im zweiten Knoten (B) Vergleichen des ersten Kommunikationsschlüssels ($k_1(t)$) mit dem zweiten Kommunikationsschlüssel ($k_2(t)$), und wenn ein Ähnlichkeitskriterium zwischen dem ersten und dem zweiten Kommunikationsschlüssel ($k_1(t)$, $k_2(t)$) erfüllt ist,
Authentifizieren des ersten Knotens (A) zur Kommunikation mit dem zweiten Knoten (B).

6. Verfahren nach Anspruch 5, wobei der Berechnung des ersten Kommunikationsschlüssels ($k_1(t)$) und der Berechnung des zweiten Kommunikationsschlüssels ($k_2(t)$) die Sendung einer Anforderungsmeldung vom ersten Knoten (A) an den zweiten Knoten (B) über eine drahtlose Kommunikationsverbindung (WL) vorangeht.

7. Verfahren nach Anspruch 5 oder 6, wobei der Berechnung des ersten Kommunikationsschlüssels ($k_1(t)$) und der Berechnung des zweiten Kommunikationsschlüssels ($k_2(t)$) die Sendung einer Anforderungsmeldung vom zweiten Knoten (B) an den ersten Knoten (A) über eine drahtlose Kommunikationsverbindung (WL) vorangeht.

8. Verfahren nach einem der Ansprüche 5 bis 7, wobei die Übertragung des ersten Kommunikationsschlüssels ($k_1(t)$) vom ersten Knoten (A) an den zweiten Knoten (B) über eine drahtlose Kommunikationsverbindung (WL) erfolgt.

9. Verfahren nach Anspruch 8, wobei die Authentifizierung eines ersten Knotens (A) zur Kommunikation mit dem zweiten Knoten (B) die Übertragung einer Authentifizierungsmeldung vom zweiten Knoten (B) an den ersten Knoten (A) über eine drahtlose Kommunikationsverbindung (WL) aufweist.

10. Verfahren nach einem der Ansprüche 5 bis 9, wobei der erste und der zweite zweiten Kommunikationsschlüssel ($k_1(t)$, $k_2(t)$) berechnet werden auf Basis von:

   einer entweder im ersten oder im zweite Knoten (A; B) gespeicherten Transferfunktion ($f(t)$), und einer jeweiligen Reihe von Werten für den mindestens einen und den zweiten Geschwindigkeitsparameter ($v_{11}$, $v_{12}$, $v_{13}$, $w_1(t)$; $v_{21}$, $v_{22}$, $w_2(t)$), wobei diese Werte während eines vorgegebenen Zeitfensters ($T(ti)$) registriert worden sind.

11. Computerprogramm, das direkt auf den internen Speicher (MA, MB) eines Computers heruntergeladen werden kann, wobei das Programm Software zum Steuern der Schritte nach einem der Ansprüche 5 bis 10 enthält, wenn das Programm auf dem Computer abläuft.

12. Computerlesbares Medium (M), auf dem ein Programm gespeichert ist, das dazu eingerichtet ist, einen Computer in die Lage zu versetzen, die Schritte nach einem der Ansprüche 5 bis 10 auszuführen.

## Revendications

1. Système pour véhicule d'authentification d'un premier noeud (A) présent dans une première unité de véhicule (110) pour communiquer avec un second noeud (B) présent dans une seconde unité de véhicule (120), **caractérisé en ce que** la première unité de véhicule (110) comprend au moins un premier capteur ($s_{11}$, $S_{12}$, $s_{13}$) configuré pour mesurer au moins un premier paramètre de vitesse ($v_{11}$, $v_{12}$, $v_{13}$, $w_1(t)$) représentant une vitesse de la première unité de véhicule (110) par rapport à une surface sous-jacente sur laquelle la première unité de véhicule (110) se déplace ; et le premier noeud (A) comprend

   une première unité de traitement (PA) configurée de manière à calculer une première clé de communication ($k_1(t)$) sur la base dudit au moins un premier paramètre de vitesse ($v_{11}$, $v_{12}$, $v_{13}$, $w_1(t)$), et

une première unité de communication (CA) configurée de manière à transmettre la première clé de communication ($k_1(t)$) via une liaison de communication sans fil (WL) ;

la seconde unité de véhicule (120) comprend au moins un second capteur ($s_{21}$, $s_{22}$) configuré pour mesurer un second paramètre de vitesse ($v_{21}$, $v_{22}$, $w_2(t)$) représentant une vitesse de la seconde unité (120) par rapport à une surface sous-jacente sur laquelle se trouve la seconde unité de véhicule (120) se déplace ;
le second noeud (B) comprend

   une seconde unité de traitement (PB) configurée de manière à calculer une seconde clé de communication ($k_2(t)$) sur la base dudit au moins un second paramètre de vitesse ($v_{21}$, $v_{22}$, $w_2(t)$), une seconde unité de communication (CB) configurée de manière à recevoir la première clé de communication ($k_1(t)$) à partir du premier noeud (A) via la liaison de communication sans fil (WL) ;

et
une unité d'authentification (AB) configurée de manière à comparer la première clé de communication ($k_1(t)$) à la seconde clé de communication ($k_2(t)$) et, si un critère de similarité entre les première et seconde clés de communication ($k_1(t)$, $k_2(t)$) est satisfait, pour authentifier le premier noeud (A) pour une communication avec le second noeud (B).

2. Système selon la revendication 1, dans lequel la première et la seconde unité de communication (CA ; CB) sont configurées de manière à transmettre un message de demande via la liaison de communication sans fil (WL), lequel message de demande est destiné à amener la première unité de traitement (PA) à calculer la première clé de communication ($k_1(t)$) et la seconde unité de traitement (PB) à calculer la seconde clé de communication ($k_2(t)$).

3. Système selon l'une quelconque des revendications précédentes, dans lequel l'unité d'authentification (AB) est configurée pour amener la seconde unité de communication (CB) à transférer un message d'authentification à la première unité de communication (CA) via la liaison de communication sans fil (WL), lequel message d'authentification est destiné à authentifier le premier le noeud (A) pour une communication avec le second noeud (B).

4. Système selon l'une quelconque des revendications précédentes, dans lequel les première et seconde clés de communication ($k_1(t)$, $k_2(t)$) sont calculées sur la base :

d'une fonction de transfert (f(t)) stockée dans l'un des premier ou second noeuds (A ; B), et d'une série respective de valeurs pour les au moins un premier et un second paramètre de vitesse ($v_{11}$, $v_{12}$, $v_{13}$, $w_1(t)$ ; $v_{21}$, $v_{22}$, $w_2(t)$), lesquelles valeurs ont été enregistrées pendant une fenêtre temporelle prédéterminée (T(ti)).

5. Procédé d'authentification d'un premier noeud (A) présent dans une première unité de véhicule (110) pour une communication avec un second noeud (B) présent dans une seconde unité de véhicule (120), **caractérisé par** les étapes consistant à :

mesurer, dans la première unité de véhicule (110), au moins un premier paramètre de vitesse ($v_{11}$, $v_{12}$, $v_{13}$, $w_1(t)$) représentant une vitesse de la première unité de véhicule (110) par rapport à une surface sous-jacente sur laquelle la première unité de véhicule (110) se déplace ;
calculer, dans le premier noeud (A), une première clé de communication ($k_1(t)$) sur la base dudit au moins un premier paramètre de vitesse ($v_{11}$, $v_{12}$, $v_{13}$, $w_1(t)$),
mesurer, dans la seconde unité de véhicule (120), au moins un second paramètre de vitesse ($v_{21}$, $v_{22}$, $w_2(t)$) représentant une vitesse de la seconde unité de véhicule (120) par rapport à une surface sous-jacente sur laquelle la seconde unité de véhicule (120) se déplace ;
calculer, dans le second noeud (B), une seconde clé de communication ($k_2(t)$) sur la base dudit au moins un second paramètre de vitesse ($v_{21}$, $v_{22}$, $w_2(t)$),
transférer la première clé de communication ($k_1(t)$) du premier noeud (A) au second noeud (B),
comparer, dans le second noeud (B), la première clé de communication ($k_1(t)$) à la seconde clé de communication ($k_2(t)$) et, si un critère de similarité entre les première et seconde clés de communication ($k_1(t)$, $k_2(t)$) est satisfait, authentifier le premier noeud (A) pour une communication avec le second noeud (B).

6. Procédé selon la revendication 5, dans lequel le calcul de la première clé de communication ($k_1(t)$) et le calcul de la seconde clé de communication ($k_2(t)$) sont précédés de la transmission d'un message de demande du premier noeud (A) au second noeud (B) via une liaison de communication sans fil (WL).

7. Procédé selon la revendication 5 ou 6, dans lequel le calcul de la première clé de communication ($k_1(t)$) et le calcul de la seconde clé de communication ($k_2(t)$) sont précédés de la transmission d'un message de demande du second noeud (B) au premier noeud (A) via une liaison de communication sans fil (WL).

8. Procédé selon l'une quelconque des revendications 5 à 7, dans lequel le transfert de la première clé de communication ($k_1(t)$) du premier noeud (A) au second noeud (B) est effectué via une liaison de communication sans fil (WL).

9. Procédé selon la revendication 8, dans lequel l'authentification du premier noeud (A) pour une communication avec le second noeud (B) comprend le transfert d'un message d'authentification du second noeud (B) au premier noeud (A) via la liaison de communication sans fil (WL).

10. Procédé selon l'une quelconque des revendications 5 à 9, dans lequel les première et seconde clés de communication ($k_1(t)$, $k_2(t)$) sont calculées sur la base :

d'une fonction de transfert (f(t)) stockée dans l'un des premier ou second noeuds (A ; B), et d'une série respective de valeurs pour les au moins un premier et un second paramètres de vitesse ($v_{11}$, $v_{12}$, $v_{13}$, $w_1(t)$, $v_{21}$, $v_{22}$, $w_2(t)$), lesquelles valeurs ont été enregistrées pendant une fenêtre temporelle prédéterminée (T(ti)).

11. Programme d'ordinateur qui est directement téléchargeable dans la mémoire interne (MA, MB) d'un ordinateur, lequel programme contient un logiciel pour commander les étapes selon l'une quelconque des revendications 5 à 10 lorsque ledit programme est exécuté sur l'ordinateur.

12. Support lisible par ordinateur (MA, MB) dans lequel est stocké un programme, le programme étant adapté pour permettre à un ordinateur de commander les étapes selon l'une quelconque des revendications 5 à 10.

**Fig. 1**

**Fig. 2**

Fig. 3a

Fig. 3b

Fig. 3c

START

No ← Communica-
tion request? ——410

Register velocity
parameter ——420

Yes

Calculate communication key based on
velocity parameter ——430

No ← Communication
key received? ——440

Yes

No ← Similarity
criterion met? ——450

Yes

END ← Authenticate ——460

**Fig. 4**

START

No ← Communica-
tion request? ——510

Regiser velocity
parameter ——520

Yes

Calculate communication key based on
velocity parameter ——530

Transfer communication ——540

END

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8344541 B
- US 8013759 B

- US 20120222130 A